# EUROPÄISCHE PATENTANMELDUNG

(11) **EP 3 521 996 A1**
(43) Veröffentlichungstag der Anmeldung: **07.08.2019**
(21) Anmeldenummer: 18154907.2
(22) Anmeldetag: 02.02.2018
(51) Int. Cl.: G06F 3/12

(54) **VERFAHREN UND VORRICHTUNG ZUR DURCHFÜHRUNG VON DRUCKVORGÄNGEN IN EINEM NETZWERK**

(71) Anmelder: Docuform GmbH, 76185 Karlsruhe (DE)
(72) Erfinder: Denk, Martin, 78464 Konstanz (DE)
(74) Vertreter: Geitz Truckenmüller Lucht Christ

(57) **Zusammenfassung**

Die Erfindung betrifft eine Vorrichtung zum Drucken in einem lokalen Netzwerk (19), wenigstens umfassend eine digitale Datenverarbeitungseinheit (6) und wenigstens einen PS-Client (11), wobei die digitale Datenverarbeitungseinheit (6) und der PS-Client (11) über das Netzwerk (19) und/oder eine USB-Schnittstelle miteinander verbunden sind. Dabei wird der mittels der digitalen Datenverarbeitungseinheit (6) erzeugter Druckauftrag mittels eines im Netzwerk (19) der digitalen Datenverarbeitungseinheit (6) befindlichen virtuellen Druckertreibers (15) zunächst in eine geräteunspezifische Postscript-Metadatei (17) überführt. Diese PS-Metadaten (17) -jedoch ohne entsprechende Druckinformationen - werden an einem außerhalb des Netzwerkes (19), aber mit diesem Netzwerk (19) über Internetdienste verbundenen Cloudserver (1) übermittelt, der erst unmittelbar vor Ausführung des Druckauftrages die zur Ausführung des Druckauftrages erforderlichen PPD.XML- Steuerungsdateien (10), die auf dem Cloudserver (1) vorgehalten sind, an das Netzwerk übermittelt, mit deren Hilfe dann die geräteunspezifische Postscript Metadatei (17) in eine gerätespezifische PS-Datei (18) zur Ausführung des Druckauftrages dahingehendüberführt wird, in dem lediglich die aktuellen PS Steuersequenzen aus der aktuellen PPD.XML Datei (10) in eine geräteunspezifische PS Datei eingefügt werden. Mit Hilfe der SNMP-realisierten dauerhaften selbsttätigen Überwachung der Ausgabegeräte (11) und der hieraus resultierenden selbsttätigen Aktualisierung der Gerätedatenbank (3) im Cloudserver handelt es sich um ein selbstlernendes und selbstkonfigurierendes wartungsfreies System

## Beschreibung

Die Erfindung betrifft ein Verfahren und eine Vorrichtung zur Durchführung von Druckvorgängen in einem Netzwerk.

Üblicherweise besteht ein solches Netzwerk aus einer Mehrzahl von miteinander über einen Server verbundenen Computern, sowie die einer Mehrzahl von Druckern, die über ein drahtgebundenes oder drahtloses Datennetz, also WLAN oder LAN oder USB miteinander verbunden sind. In kleinster denkbarer Gestaltung besteht ein solches Netzwerk aus einem Computer oder einem sonstigen digitalen Verarbeitungsgerät und einem Drucker, die wie vorstehend erläutert, miteinander verbunden sind. In konkreter Ausgestaltung umfasst das Netzwerk mehrere Arbeitsplatzrechner, die zur Bearbeitung von Post-Script-Dateien geeignet sind, und einem oder mehreren Post-Script-fähigen Netzwerk-Clients, so genannten PS-Clients, die umgangssprachlich als Netzwerkdrucker bezeichnet werden.

Hierzu ist es aus der EP 2 535 800 A1 bekannt, dass mittels des bereits erwähnten zentralen Servers die Geräteeigenschaften, insbesondere die Gerätefunktionen und Anschlussdaten der besagten PS-Clients, mittels des zentralen Servers über ein Geräteprotokoll, insbesondere das SNMP-Protokoll, kontinuierlich abgefragt und in einer zentralen Gerätedatenbank abgelegt werden.

Sobald nun ein Anwender mittels seines Arbeitsplatzrechners eine geräteunspezifische Post-Script-Datei, kurz PS-Datei, erzeugt hat wird diesem Anwender auf dessen Anfrage oder selbsttätig von dem zentralen Server unter Berücksichtigung der in der Gerätedatenbank abgelegten Geräteeigenschaften, umfassend die Gerätefunktionen und Anschlussdaten, der aktuell im Netzwerk befindlichen PS-Clients zur Auswahl angeboten, worauf hin dann der Anwender an seinem Arbeitsplatzrechner im weiteren in Abhängigkeit hier von seinem Verarbeitungswunsch hinsichtlich der PS-Datei derart formuliert, dass zumindest das ausgewählte Gerät und die jeweils gewünschten Gerätefunktionen und Anschlussdaten des ausgewählten Gerätes definiert sind. Der Vorteil dieser vorbekannten Lösung besteht darin, dass im Unterschied zu den immer noch weit verbreiteten Stand der Technik nicht dezentral an den im Netzwerk angeschlossenen Arbeitsplatzrechnern jeweils die zur Abarbeitung eines Druckauftrages mittels der im Netzwerk befindlichen PS-Clients, hier vornehmlich Druckern, erforderlichen Druckertreiber vorgehalten werden müssen und jeweils im Falle eines Wechsels der angeschlossenen Drucker regelmäßig aktualisiert werden müssen.

Der Vorteil der Bevorratung der ständig über das SNMP-Protokoll aktualisierten Daten der jeweils im Netzwerk befindlichen PS-Clients liegt darin, dass in der zentralen Gerätedatenbank in dem Netzwerk die entsprechenden Daten selbsttätig aktualisiert werden, so dass der Anwender die Auswahl eines PS-Clients unter Berücksichtigung der in Echtzeit zur Verfügung gestellten jeweils aktuellen Gerätedaten vornehmen kann. Die Gerätedatenbank pflegt sich dabei selbsttätig, so dass die insoweit ansonsten erforderlichen Arbeiten eines Netzwerkadministrators insbesondere zur Aktualisierung der zentral oder dezentral vorgehaltenen Druckertreiber vollständig entfällt.

Zusätzlich ist aus der EP 1 229 724 A2 ein interaktives Druckverfahren, das ebenfalls eine Mehrzahl von Druckgeräten ausgelegt ist, vorbekannt.

In Weiterentwicklung dieses Standes der Technik ist aus der EP 2 905 965 B1 ein Druckverfahren und eine -vorrichtung zur Bearbeitung von PS-Dateien vorbekannt, gemäß dem ein Anwender eine PS-Datei erzeugt, die selbsttätig gemäß dem Verarbeitungswunsch des Anwenders also dem ausgewählten Drucker bzw. PS-Client die erzeugte PS-Datei um eine Zusatzinformationen, betreffend den Verarbeitungswunsch des Anwenders ergänzt, die etwa im Header der erzeugten PS-Datei hinzugefügt wird, wobei die PS-Datei als solche weiterhin als geräteunspezifische PS-Datei im System vorgehalten wird. Zusätzlich sieht das vorbekannte erfindungsgemäße Verfahren vor, das zusätzlich die PPD-Information mittels eines Interpreters die Steuerungsequenzen und Anschlussdaten eines jeden PS-Clients in dem jeweiligen Netzwerk und/oder beliebiger zusätzlicher PS-Clients innerhalb des Netzwerks extrahiert und in einem weiteren Verarbeitungsschritt mittels eines in dem Netzwerk installierten Konverters in eine gerätespezifische, intelligente XML-Steuerungsdatei transformiert.

Diese intelligenten XML- Steuerungsdateien werden in einer zentralen XML-Steuerungsdatenbank auf dem erwähnten Server des fraglichen Netzwerks abgelegt und vorgehalten. Gemäß dem vorbekannten Verfahren wird dann erst unmittelbar vor der Endverarbeitung, vornehmlich dem Ausdruck der, wie erwähnt, immer noch geräteunspezifischen PS-Datei, diese Datei unter Verwendung der intelligenten XML-Steuerungsdatei in eine gerätespezifische PS-Datei transformiert und dem von dem jeweiligen Anwender ausgewählten PS-Client, also dem ausgewählten Drucker zum Ausdruck zugeführt.

Der Vorteil dieses vorbekannten Verfahrens besteht also darin, dass bis unmittelbar vor Ausführung des Druckauftrages in dem Netzwerk eine geräteunspezifische PS-Datei vorgehalten wird, so dass bis zuletzt veränderter Bearbeitungswünsche des Anwenders oder aber auch eine veränderte Situation bzw. ein veränderter Zustand der im Netzwerk befindlichen PS-Clients, also beispielsweise veränderte Anschlussdaten des ausgewählten PS-Clients, bis zuletzt berücksichtigt werden können, in dem die jeweils zur Umsetzung des Verarbeitungswunsches benötigten Steuerungssequenzen in Echtzeit bezogen werden, so dass die Umsetzung des Verarbeitungsprozess des Anwenders auch bei einer veränderten Gerätesituation jederzeit garantiert werden kann.

Dadurch dass in dem besagten Netzwerk bis kurz vor der Verarbeitung der vom Anwender erzeugten PS-Datei eine geräteunspezifische PS-Datei vorgehalten wird, sind auch sämtliche Voraussetzungen für ein "follow-to-print-Verfahren gegeben, so dass also der Verarbeitungswunsch des Benutzers, soweit möglich, jeweils an dem Gerät umgesetzt werden kann, an dem der jeweilige Anwender den Druckauftrag umsetzt. Konkret kann also der Anwender in einer größeren Gebäudeeinheit an einem beliebigen Drucker den von ihm gewünschten Ausdruck abrufen, weil sichergestellt ist, dass seinem Druckauftrag die gerätespezifischen Informationen erst unmittelbar i.V.m. dem geplanten Ausdruck übermittelt werden, so dass die Datei an dem jeweils gewünschten Ort und dem eben dort vorhandenen Drucker ausgedruckt werden kann. Voraussetzung für die Funktion des Verfahrens ist also lediglich, dass zu jedem im Netzwerk befindlichen PS-Client einmal die erwähnte intelligente XML-Steuerungsdatei erzeugt und in der auf dem Server verwalteten XML-Datenbank abgelegt wird. Eine darüber hinausgehende Druckerverwaltung oder -administration ist gemäß diesem Verfahren nicht mehr erforderlich.

Voraussetzung für die Funktion dieses vorbekannten Verfahrens ist es also, dass in dem jeweiligen Netzwerk auf dem dieses Netzwerk verwaltenden Server, dem sogenannten Print-Server, also innerhalb dieses Netzwerkes, eine XML-Datenbank, umfassend die für sämtliche im Netzwerk befindlichen PS-Clients erforderlichen intelligenten XML-Steuerungsdateien.

Der Erfindung liegt die Aufgabe zu Grunde, diese Lösung dahingehend weiterzubilden, dass die Vorhaltung der erwähnten XML-Datenbank in dem jeweiligen Netzwerk, also der Print-Server, entfallen kann.

Diese Aufgabe wird durch eine Vorrichtung gemäß dem geltenden Anspruch 1, gelöst. Vorteilhafte Weiterbildungen der Erfindung können den geltenden Ansprüchen 2 -14 entnommen werden.

Gemäß dem geltenden Anspruch 1 betrifft die Erfindung eine Vorrichtung zum Drucken in einem lokalen Netzwerk, das wenigstens eine digitale Datenverarbeitungseinheit und wenigstens einen Drucker bzw. PS-Client umfasst, die über das Netzwerk und/oder eine USB-Schnittstelle miteinander datenverbunden sind.

Im Unterschied zu den vorbekannten Lösungen umfasst die erfindungsgemäße Vorrichtung einen außerhalb eines oder mehrerer unabhängiger lokaler Netzwerke angeordneten Cloudserver, der mit einem oder mehreren Arbeitsplatzsystemen, insbesondere digitalen Datenverarbeitungseinheiten, die sich in den jeweiligen lokalen Netzwerken befinden, über Internetdienste verbunden ist. Ein Druckserver im lokalen Netzwerk ist dabei nicht erforderlich. Dabei wird ein mittels einer der digitalen Datenverarbeitungseinheiten erzeugter Druckauftrag mittels eines einheitlichen virtuellen Druckertreibers zunächst in eine geräteunspezifische Postscript (PS)-Metadatei überführt. Dieser einheitliche virtuelle Druckertreiber wird auf Anfrage der digitalen Datenverarbeitungseinheit automatisch vom Cloudserver bezogen und auf der jeweiligen Datenverarbeitungseinheit installiert. Im Rahmen des Direktdruckes verbleibt diese geräteunspezifische PS-Metadatei inkl. der Druckinhalte immer im lokalen Netzwerk.

Wird vom Anwender an der lokalen digitalen Datenverarbeitungseinheit jedoch die "Follow-to-Print Funktion" gewählt, werden diese geräteunspezifischen PS Metadateien inkl. Druckinhalte an den Cloudserver übermittelt. Diese PS-Metadatei besteht bereits aus reinen Postscriptdaten und umfasst die Spezifikation des Druckauftrages und der von dem jeweiligen Nutzer ausgewählten Drucker, einschließlich der Druckdateninformation selbst. Wird vom Anwender an seiner lokalen Datenverarbeitungseinheit ein Druckauftrag initiiert und die bereits beschriebene PS-Metadatei generiert, wird eine Kommunikation zum Cloudserver aufgebaut und die Spezifikation des Druckauftrags des jeweiligen Nutzers an den Cloudserver übermittelt. Dabei handelt es sich jedoch lediglich um den Namen des Druckauftrages und die dazugehörige Auswahl des Ausgabegerätes selbst. Druckinhalte als solche werden dabei nicht übertragen. Der Cloudserver übermittelt hieraufhin die zur Ausführung des Druckauftrages oder der Druckaufträge erforderlichen PPD.XML- Steuerungsdateien, die hierzu auf dem Cloudserver in einer entsprechenden Gerätedatenbank vorgehalten sind, an die lokale Datenverarbeitungseinheit in dem jeweiligen lokalen Netzwerk.

Die Übermittlung dieser Dateien erfolgt pro ausgewählten Postscript (PS)-Client unmittelbar vor der Ausführung des jeweiligen Druckauftrages einmalig und initial. Bei Folgedruckaufträgen wird dann lediglich überprüft, ob die PPD.XML-Steuerungsdatei bereits übertragen wurde, oder ob sich der PS-Client an einem oder mehreren Anschlüssen im lokalen Netzwerk verändert hat. Falls dies der Fall ist, wird jeweils in Echtzeit eine Aktualisierung der PPD.XML-Steuerungsdatei vorgenommen und dann wiederum unmittelbar Ausführung des Druckauftrages vom Cloudserver an die lokale Datenverarbeitungseinheit übertragen.

Mit Hilfe der PPD.XML- Steuerungsdatei, welche nun aktuell der lokalen Datenverarbeitungseinheit vorliegt, werden die gerätespezifischen Ausgabekommandos in die geräteunspezifische PS-Meta-Datei eingefügt. Durch diesen Vorgang des Einsetzens der Steuerkommandos wird die geräteunspezifische PS-Meta-Datei in eine gerätespezifische PS-Druckdatei überführt. Dadurch ist sichergestellt, dass der Druckauftrag auf jeden Fall bestmöglichst am jeweiligen PS-Client ausgegeben werden kann.

Um Missbrauchsmöglichkeiten auszuschließen, setzt die Übermittlung der PPD.XML- Steuerungsdateien zunächst eine Überprüfung der Berechtigung und Identifikation der jeweiligen digitalen Datenverarbeitungseinheit und/oder des jeweiligen Nutzers voraus. Dies geschieht jeweils bei der Erstanmeldung der digitalen Datenverarbeitungseinheiten beim Cloudserver, wobei der der virtuelle Druckertreiber bezogen wird und für die jeweilige Datenverarbeitungseinheit eine individuelle verschlüsselte Kommunikation konfiguriert wird. Insoweit genügt die erfindungsgemäße Vorrichtung auch den aktuellen Anforderungen an den Datenschutz.

In weiterer Konkretisierung der Erfindung sind die in dem lokalen Netzwerk angeordneten digitalen Datenverarbeitungseinheiten mit einem auf diesen Datenverarbeitungseinheit lauffähigen Programm versehen, dass über das so genannte Geräteprotokoll, also über das erwähnte SNMP-Protokoll, sämtlichen in dem jeweiligen Netzwerk aktuell befindlichen PS-Clients, vornehmlich den Druckern, selbsttätig und ständig kommuniziert, so dass mittels dieses Programms dem jeweiligen Nutzer stets die aktuellen Geräteinformationen in Echtzeit zur Verfügung stehen, die insbesondere zur Auswahl desjenigen Druckers bzw. PS-Clients benötigt werden, mit dem der jeweilige Druckauftrag ausgeführt werden soll. Auch werden die clientspezifischen Geräteeigenschaften nach der Entscheidung des Anwenders, wohin er drucken möchte, gemäß dem bereits beschriebenem Vorgang an den Cloudserver übertragen. Basierend darauf wird dann in Echtzeit die erforderliche PPD.XML-Steuerungsdatei kurz vor dem Druckvorgang an die lokale Datenverarbeitungseinheit zurück geliefert, damit diese dann, wie bereits erläutert, bestmöglich ausgegeben werden kann, aber auch Veränderungen am PS-Client sofort erkannt werden, um erforderlichenfalls die entsprechende PPD.XML Datei durch den Cloudserver zu aktualisieren.

Die Anbindung der lokalen digitalen Verarbeitungseinheiten an dem Cloudserver erfolgt zunächst initial, um vom Cloudserver den virtuellen Druckertreiber zu beziehen und die persönliche Verschlüsselung zu generieren. Erst anlässlich der Generierung des ersten Druckauftrages wird erneut die Verbindung zum Cloudserver aufgebaut, um diesen den über das SNMP-Protokoll ermittelten aktuellen Drucker zu übermitteln, um dann vom Cloudserver die dazugehörige gerätespezifische PPD.XML Steuerungsdatei zu beziehen. Sobald die aktuelle PPD.XML Steuerungsdatei bei der digitalen Datenverarbeitungseinheit des lokalen Netzwerkes vorliegt, wird die Verbindung zum Cloudserver beendet. Der Druckvorgang selbst erfolgt, wie bereits erläutert, ausschließlich im lokalen Netzwerk. Die digitale Datenverarbeitungseinheit wird über das SNMP-Protokoll ständig aktualisiert und mit den aktuellen Geräteeigenschaften der jeweiligen lokalen PS-Clients versorgt. Erst bei einem erneuten Druckauftrag wird die Verbindung zum Cloudserver erneut aufgebaut, um zu verifizieren, ob die für den Druck benötigte PPD.XML Datei lokal vorliegt, diese aktualisiert werden muss, oder bei Tausch oder Ergänzung eines PS-Client neu übermittelt werden muss. Für den Druckvorgang selbst und die Überführung der geräteunspezifischen PS-Datei in eine gerätespezifische PS Druckdatei wird die Verbindung zum Cloudserver nicht mehr benötigt. Durch diese Vorgänge wird die Gerätedatenbank im Cloudserver zwar ständig aktualisiert, die Kommunikation zwischen Cloudserver und lokalen Datenverarbeitungseinheiten jedoch minimiert.

Gemäß dem geltenden Anspruch 5 ist darüber hinaus sichergestellt, dass für den Fall, dass zwischen der Erstellung eines Druckauftrages mittels der erwähnten digitalen Verarbeitungseinheit im Falle einer zeitlich nachgelagerten Ausführung des Druckauftrages und einer zwischenzeitlichen Veränderung der Geräteeigenschaften des für den jeweiligen Druckauftrag ausgewählten PS-Clients erkannt wird und eine Aktualisierung der PPD.XML Steuerungsdatei sichergestellt ist, um auch dann die optimale Ausführung des Druckauftrages zu ermöglichen. Hierdurch ist gewährleistet, dass der Druckauftrag auch bei zwischenzeitlich veränderter Gerätesituation in dem jeweiligen Netzwerk sicher ausführbar ist.

Darüber hinaus wird das bereits erwähnte SNMP-Protokoll Vorteil auch dazu genutzt, etwa durch den Druckauftrag selbst veränderte Geräteeigenschaften an die jeweilige digitale Verarbeitungseinheit zurück zu melden, die dann den veränderten Gerätezustand etwa zum Zwecke statistischer Auswertungen an den Cloudserver, bzw. an dessen Gerätedatenbank übermittelt.

Diese Funktionen kann wiederum mit Vorteil dazu genutzt werden, das entsprechende Warnhinweise an die in den angeschlossenen Netzwerken befindlichen digitalen Datenverarbeitungseinheiten übermittelbar sind, bzw. selbsttätig Bestellvorgänge, etwa betreffend Verbrauchsmaterialien der Druckvorrichtungen, über den angeschlossenen Cloudserver auslösbar sind.

Gemäß dem geltenden Anspruch 9 genügt die erfindungsgemäße Vorrichtung auch den aktuellen Anforderungen an den Datenschutz insoweit, da die in dem Netzwerk erzeugten Druckaufträge zu keinem Zeitpunkt die jeweiligen Netzwerke verlassen, sondern die Druckaufträge lediglich als Metadaten übermittelt werden, wobei der Druckauftrag selbst das Netzwerk nicht verlässt und auch erst unmittelbar vor der Ausführung des Druckvorgangs in dem Netzwerk selbst in eine gerätespezifische Datei zum Zwecke des Ausdrucks zugeführt wird.

Da es sich bei den geräteunspezifischen PS-Dateien bereits um druckbare Datenströme handelt, können auch diese mit den Standardeinstellungen auf beliebige PS-Clients ausgegeben werden. Bei auftretenden Kommunikationsstörungen mit dem Cloudserver oder Nichterreichen des Cloudservers im Internet ist dadurch gewährleistet, dass sowohl mit Hilfe der bereits übermittelten PPD.XML Steuerungsdateien oder mit den geräteunspezifischen PS-Dateien in jedem Fall ein Ausdruck im lokalen Netzwerk erfolgen kann.

In vorteilhafter Weiterbildung der erfindungsgemäßen Vorrichtung können auch Remote-Druckaufträge oder auch so genannte "Follow-to-Print-Aufträge" mit der erfindungsgemäßen Vorrichtung bearbeitet werden, indem nämlich die zur Ausführung des Druckauftrages benötigten geräteunspezifischen PS-Metadaten inkl. Druckinhalte in einer zentralen Printqueue des Cloudservers übermittelt und dort vorgehalten werden. Erst zu dem Zeitpunkt, an dem der jeweilige Nutzer etwa direkt an dem jeweiligen Drucker bzw. PS-Client den Druckauftrag abruft, wird zur Ausführung des Druckauftrages benötigte PPD.XML-Steuerungsdateie vom Cloudserver bezogen, um die geräteunspezifischen PS-Metadateien durch Einsetzen der gerätespezifischen Steuerungsbefehle in eine gerätespezifische Druckdatei überzuführen, diese dann an den lokalen Drucker zu übertragen, welcher sich im lokalen Netzwerk befindet, um dann den Druckauftrag vor Ort auszuführen. In Ergänzung ermöglicht dieses Verfahren auch die Fähigkeit im Rahmen des "Follow-to-print-Druckes" seitens des Anwenders von Netzwerk zu Netzwerk zu wandern, sich dort zu authentifizieren und seine in einem anderen Netzwerkt generierten Druckdaten immer korrekt und optimal auszugeben.

Ein weiterer nicht zu unterschätzender Vorteil der erfindungsgemäßen Lösung besteht darin, dass im erfindungsgemäßen Cloudserver grundsätzlich immer alle PPD.XML Dateien aller Hersteller vorgehalten und aktualisiert werden. Dadurch werden beispielsweise in einem lokalen Netzwerk angeordnete neue Geräte durch das SNMP-Protokoll automatisch erkannt und dem Anwender als Ausgabegerät vorgeschlagen. Beim ersten Druckvorgang auf diesem neuen Gerät werden PS-Clients und dessen Eigenschaften unmittelbar vor dem Druckvorgang an den Cloudserver übertragen. Dieser aktualisiert seine zentrale Gerätedatenbank und liefert dem Anwender oder besser gesagt an die con dem Anwender eingesetzte digitale Datenverarbeitungseinheit unmittelbar die gerätespezifische PPD.XML-Datei zurück, um den optimalen Ausdruck zu gewährleisten. Dieser Vorgang erfolgt automatisch, so dass dann das neue Gerät unmittelbar in Betrieb gesetzt werden kann, ohne dass hierzu umständliche Installationen oder Dienste eines Administrators erforderlich sind. Die Kommunikation der lokalen Datenverarbeitungseinheiten erfolgt grundsätzlich nur im Rahmen des Neuanlegens eines PS-Clients, und oder in Verbindung mit erforderlichen Aktualisierungen der PPD.XML-Steuerungsdateien. Dadurch wird auch ein Druckvorgang im lokalen Netzwerk ermöglicht, auch wenn ggf. temporär der lokale Cloudserver nicht erreichbar ist. Analog zur eingangs erwähnten Erfindung handelt es sich auch hier um ein wartungsfreies und selbstlernendes System.

Bei richtigem Verständnis kann die erfindungsgemäße Vorrichtung analog auch zum Betrieb von 3-D-Druckvorrichtungen Beibehaltung der vorstehend geschilderten Vorteile eingesetzt werden.

Die Erfindung wird anhand eines in der Zeichnung dargestellten Ausführungsbeispiels näher erläutert.

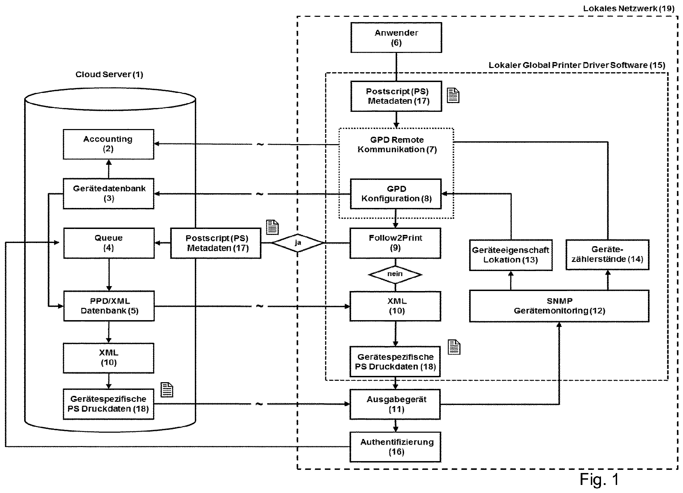

Es zeigt
Fig. 1: ein Blockschaltbild der erfindungsgemäßen Vorrichtung

Gemäß der Darstellung in Fig.1 umfasst die erfindungsgemäße Vorrichtung zunächst ein lokales Netzwerk 19, umfassend wenigstens eine digitale Datenverarbeitungseinheiten 6, die über dieses Netzwerk 19 mit einem Ausgabegerät (11), etwa einem Drucker, also einem PS-Client datenverbunden ist.

Das besagte Netzwerk 19, bzw. genauer gesagt die in diesem Netzwerk 19 befindlichen digitalen Datenverarbeitungseinheiten 6, sind dabei mit einem außerhalb dieses Netzwerkes 19 angeordneten Cloudserver 1 verbunden.

Für den Fall, dass ein Nutzer der erfindungsgemäßen Vorrichtung nun mittels seiner digitalen Datenverarbeitungseinheit 6 einen Druckauftrag generiert hat, so wird dieser Druckauftrag zunächst mittels eines auf jedem der im Netzwerk 19 befindlichen digitalen Datenverarbeitungseinheiten 6 installierten virtuellen Druckertreibers 7 in eine geräteunspezifische PS-Metadatei 17 überführt.

Im Übrigen wird der Nutzer in Verbindung mit seinem Druckauftrag in Abhängigkeit von ihm dem über das so genannte SNMP-Protokoll übermittelten Geräteeigenschaften 13 der aktuell in dem Netzwerk 19 befindlichen PS-Clients bzw. Ausgabeberäte 11 eines oder mehrere dieser Drucker bzw. PS-Clients 11 auswählen und darüber hinaus weitere Funktionalitäten des ausgewählten Ausgabegerätes 11 bestimmen, die für den Druckauftrag benötigt werden, wie etwa das gewählte Papierformat, ob der Druck doppelseitig oder einseitig bzw. in Farbe erfolgen soll.

Die Metadaten 17 dieses Druckauftrages werden dann in Verbindung mit der Spezifikation des Druckauftrages und der Spezifikation der ausgewählten PS-Clients 11 an den mit dem Netzwerk verbundenen Cloudserver 1 übermittelt.

Der Cloudserver 1 überprüft in einem ersten Schritt, ob es sich um die Metadaten 17 eines lokal zu druckenden Druckauftrags handelt, oder ob es sich um einen bereits geräteunspezifische PS-Datei 17 handelt, die für einen follow-to-print-Druckauftrag 9 vorgesehen ist. Für den Fall, dass es sich um einen follow-to-print-Druckauftrag 9 handelt, wird dieser Druckauftrag zunächst in einer Printqueue 4 des Cloudservers 1 bis zum späteren Abruf des Druckauftrages abgelegt.

Für den vermutlich weitaus häufigeren Fall, dass der Druckauftrag 17 mehr oder minder sofort lokal ausgeführt werden soll, stellt der Cloudserver 1 aus einer so genannten Gerätedatenbank 3 des Cloud-Servers (1) in Abhängigkeit von der Spezifikation des Druckauftrages 17 die zur Ausführung des Druckauftrages 17 erforderlichen PPD.XML Steuerungsdateien 10 bereit und übermittelt diese unmittelbar vor Ausführung des Druckauftrages 17 an den lokalen Global Printer Driver 15 des lokalen Netzwerkes 19 zurück, in dem der geräteunspezifische Druckauftrag als PS-Metadatei 17 in eine gerätespezifische PS-Datei 18 überführt wird, der von dem jeweiligen PS-Client 11 bestimmungsgemäß ausgedruckt wird.

Im Falle eines follow-to print-Druckauftrages 9 werden die erforderlichen PS-Metadaten 17 mit den geräteunspezifischen Druckinformationen in der Printqueue 4 des Cloudservers 1 vorgehalten. Im Cloudserver 1 werden mit Hilfe der PPD.XML Steuerungsdateien 10 aus der PPD.XML-Datenbank 5 aus den PS-Metadaten 17, die sich in der Printqueue 4 befinden, gerätespezifische PS-Druckdateien 18 generiert und direkt vom Cloudserver 1 an den jeweilige PS-Client 11 übermittelt, an dem sich zuvor der Anwender authentifiziert hat.

Dabei sind die digitalen Datenverarbeitungseinheiten 6 in dem lokalen Netzwerk 19 mit den in dem Netzwerk jeweils vorhandenen PS-Clients 11 über das so genannte SNMP-Protokoll verbunden. Über dieses SNMP-Protokoll bzw. das in dem Netzwerk befindliche SNMP-Gerätemonitoring 12 ist sichergestellt, dass dem Anwender über die jeweiligen Datenverarbeitungseinheiten 6 jeweils der aktuelle Gerätezustand mitgeteilt wird. Diese Informationen werden über eine entsprechende Remote-Kommunikation über die GPD-Kommunikationsschnittstelle 7 an den außerhalb des lokalen Netzwerkes 19 angeordneten Cloudserver 1 übermittelt und ebendort in der bereits erwähnten Gerätedatenbank 3 abgelegt. Hierdurch ist sichergestellt, dass in der Gerätedatenbank 3 des Cloudservers 1 jeweils die aktuellen Daten der in dem jeweiligen lokalen Netzwerk 19 vorhandenen Ausgabegeräte 11 vorhanden sind.

Vor dem Hintergrund, dass mit zunehmender Nutzung der erfindungsgemäßen Lösung der Cloudserver 1 mit einer unübersehbaren Vielzahl von Netzwerken 19 in Datenverbindung steht, kann davon ausgegangen werden, dass früher oder später mehr oder minder sämtliche in diesem Zusammenhang verfügbaren Geräteinformationen 13, 14 in der Gerätedatenbank 3 des Cloudservers 1 abgelegt sind. Zusätzlich können auch lokale Druckvorgänge über ein Accounting-Modul 2 statistisch ausgewertet werden können. Die zentrale Pflege der PPD.XML Datenbank 5 innerhalb des Cloudservers 1 ermöglicht eine beliebige Kaskadierung mengenmäßig unlimitierter lokaler Datenverarbeitungseinheiten 6 und lokaler Netzwerke 19. Des Weiteren garantiert die Kommunikation der lokalen digitalen Verarbeitungseinheiten 6 und deren GPD-Konfiguration 8 mit Hilfe der generierten gerätespezifischen PPD.XML- Steuerungsdateien 18 zu jeder Zeit ein vollständigen und optimalen Ausdruck an den lokalen Ausgabegeräten 11.

### BEZUGSZEICHENLISTE

- 1: Cloudserver
- 2: Accounting-Modul
- 3: Gerätedatenbank
- 4: Queue
- 5: PPD/XML-Datenbank
- 6: digitale Datenverarbeitungseinheit
- 7: Global Printer Driver (GPD) Remote Kommunikation
- 8: GPD-Konfiguration
- 9: Follow-to-Print-Druckauftrag
- 10: PPD.XML-Steuerungsdatei
- 11: Ausgabegerät
- 12: SNMP-Gerätemonitoring
- 13: Geräteeigenschaft Lokation
- 14: Gerätezählerstände
- 15: Lokale Global Printer Driver Software
- 16: Authentifizierung
- 17: Postscript (PS) Metadaten
- 18: gerätespezifische PS-Druckdaten
- 19: lokales Netzwerk

## Patentansprüche

1. Vorrichtung zum Drucken in einem lokalen Netzwerk (19), wenigstens umfassend wenigstens eine digitale Datenverarbeitungseinheit (6), vorzugsweise wenigstens einen Arbeitsplatzrechner, und wenigstens ein Ausgabegerät (11), bzw. einen PS-Client, wobei die digitale Datenverarbeitungseinheit (6) und das Ausgabegerät (11) über das lokale Netzwerk (19) und/oder eine USB- Schnittstelle miteinander datenverbunden sind, **dadurch gekennzeichnet, dass** die digitale Datenverarbeitungseinheit (6), vorzugsweise einige oder alle digitalen Datenverarbeitungseinheiten (6) des lokalen Netzwerkes (19), mit einem außerhalb des lokalen Netzwerkes (19) angeordneten Cloudserver (1) nach vorausgegangener Anmeldung der digitalen Datenverarbeitungseinheit (6) am Cloudserver (1), über Internetdienste verbunden ist, wobei ein mittels der digitalen Datenverarbeitungseinheit (6) erzeugter Druckauftrag mittels eines auf jedem der im Netzwerk (19) befindlichen digitalen Datenverarbeitungseinheiten (6) installierten, einheitlichen virtuellen Druckertreibers (15), der auf Anfrage der jeweiligen digitalen Datenverarbeitungseinheit vom Cloudserver (1) selbsttätig beziehbar ist, in eine jeweils geräteunspezifische PS-Metadatei (17) überführbar ist, wobei an den Cloudserver (1) ausschließlich die Kennung des Druckauftrages und das über die jeweilige digitale Datenverarbeitungseinheit (6) vom jeweiligen Anwender ausgewählte Ausgabegerät (11) übermittelt werden und wobei anschließend diese geräteunspezifische PS-Meta-datei (17), jeweils insbesondere umfassend die Spezifikation des Druckauftrages und der ausgewählten Ausgabegeräte (11) im Falle eines unmittelbar auszuführenden Druckauftrages stets im lokalen Netzwerk (19) verbleibt, wobei im Falle eines über die jeweilige digitale Datenverarbeitungseinheit (6) eingestellten Follow-to-Print Auftrages (9) die jeweilige geräteunspezifische PS-Metadatei (17), umfassend die Spezifikation des Druckauftrages, sowie der zur Ausführung des Druckauftrages ausgewählten Ausgabegeräte (11) in Verbindung mit den Druckinhalten an den Cloudserver (1), vorzugsweise selbsttätig, übermittelbar ist, woraufhin dann die zur Ausführung des Druckauftrages oder der Druckaufträge erforderlichen PPD.XML- Steuerungsdateien (10), die auf dem Cloudserver (1) vorgehalten sind, an die jeweilige digitale Datenverarbeitungseinheit (6) übermittelbar sind, wobei dann, vorzugsweise unmittelbar vor der Auslösung des Druckvorganges selbst durch den jeweiligen Anwender mittels der jeweiligen digitalen Datenverarbeitungseinheit (6), der Druckauftrag bzw. der Druckaufträge mittels der jeweiligen PPD.XML- Steuerungsdatei (10) bzw. der PPD.XML- Steuerungsdateien (10) in eine gerätespezifische PS-Datei (18) überführbar und ausdruckbar sind.

2. Vorrichtung nach Anspruch 1, **dadurch gekennzeichnet, dass** wenigstens die erste Anmeldung der digitalen Datenverarbeitungseinheit (6), vorzugsweise sämtliche Anmeldungen der digitalen Datenverarbeitungseinheiten (6) in dem lokalen Netzwerk (19) an den Cloudserver (1) mit einer Überprüfung der Berechtigung und Identifikation der jeweiligen digitalen Datenverarbeitungseinheit (6) und/oder des jeweiligen Nutzers dieser digitalen Datenverarbeitungseinheit (6) verbunden ist, wobei im Anschluss an diese Erstanmeldung der digitalen Verarbeitungseinheit (6) vom Cloudserver(1) der einheitliche virtuellen Druckertreibers (15) übermittelt und eine individuelle verschlüsselte Kommunikation konfiguriert wird.

3. Vorrichtung nach Anspruch 1 oder 2, **dadurch gekennzeichnet, dass** auf dem oder den digitalen Datenverarbeitungseinheit (6) in dem jeweiligen lokalen Netzwerk (19) jeweils ein Programm installiert ist, dass über das SNMP-Protokoll (12) mit sämtlichen in dem jeweiligen Netzwerk (19) befindlichen PS-Clients (11) selbsttätig kommuniziert, so dass mittels dieses Programms dem jeweiligen Nutzer der digitalen Datenverarbeitungseinheit (6) die jeweils aktuelle in dem lokalen Netzwerk (19) zur Verfügung stehenden PS-Clients bzw. Ausgabegeräte (11) und deren aktuelle Geräteeigenschaften (13) anzeigbar sind.

4. Vorrichtung nach Anspruch 3, **dadurch gekennzeichnet, dass** in den Cloudserver (1) eine Gerätedatenbank (3) integriert ist, wobei der Cloudserver (1) über das SNMP-Protokoll (12) mit den angeschlossenen digitalen Datenverarbeitungseinrichtungen (6) verbunden ist, so dass mittels dieser Datenverbindung selbsttätig eine ständige Aktualisierung der in der Gerätedatenbank (3) vorgehaltenen PPD.XML-Steuerungsdateien (10) sichergestellt ist.

5. Vorrichtung nach einem oder mehrerer der vorhergehenden Ansprüche, **dadurch gekennzeichnet, dass** für den Fall, dass zwischen der Erstellung eines Druckauftrages mittels der digitalen Verarbeitungseinheit (6) und der zeitlich nachgelagerten Ausführung des Druckauftrages der Nutzer der digitalen Datenverarbeitungseinheit (6) die Auswahl des jeweiligen Ausgabegerätes (11) verändert oder sich die Eigenschaften des ausgewählten Ausgabegerätes (11) verändert haben, dies selbsttätig über das installierte Programme mittels der digitalen Datenverarbeitungseinheit (6) erkannt und ebenfalls selbsttätig über das SNMP-Geräteprotokoll (12) an den Cloudserver (1) übermittelt, woraufhin wiederum selbständig die entsprechend geänderte PPD.XML-Steuerungsdateien (10) an die jeweilige digitale Verarbeitungseinheit (6) übermittelt wird.

6. Vorrichtung nach einem oder mehreren der vorhergehenden Ansprüche, **dadurch gekennzeichnet, dass** nach abgeschlossenem Druckauftrag über das SNMP-Geräteprotokoll (12) erfassten Druckinformationen von dem jeweiligen Ausgabegerät (11) an die den Druckauftrag auslösende digitale Datenerarbeitungseinrichtung (6) zurückgemeldet werden, die dann selbständig von der digitalen Verarbeitungseinrichtung (6) an den Cloudserver (1), vorzugsweise zum Zwecke statistischer Auswertungen (2), übermittelt werden.

7. Vorrichtung nach Anspruch 6, **dadurch gekennzeichnet, dass** nach abgeschlossenem Druckauftrag über das SNMP-Geräteprotokoll über ein integriertes SNMP-Gerätemonitoring (12) etwa aufgrund des Druckauftrages oder aus sonstigen Umständen erfolgte Veränderungen der Geräteeigenschaften des jeweiligen PS-Clients (11), etwa veränderte Gerätezählerstände (14) oder ein verändertes Tonerlevel, an die jeweilige digitale Datenverarbeitungseinheit (6) übermittelbar sind und eben dort, vorzugsweise mittels des auf dieser digitalen Datenverarbeitungseinheit (6) installierten GPD-Remote-Kommunikation (7) an den Cloudserver (1) und ebendort an ein in den Cloudserver (1) integriertes Accounting-Modul (2) übermittelbar sind.

8. Vorrichtung nach Anspruch 7, **dadurch gekennzeichnet, dass** innerhalb des Cloudservers (1) Geräteeigenschaften, wie etwa Tonerlevel (14), Zählerstände und andere wartungsrelevante Informationen der in den angeschlossenen lokalen Netzwerken (19) befindlichen Ausgabegeräte (11), mittels einer Global Printer Driver (GPD) Kommunikationsschnittstelle (7) an das Accounting-Modul (2) innerhalb des Cloudservers (1) selbsttätig übermittelbar sind.

9. Vorrichtung nach Anspruch 7 oder 8, **dadurch gekennzeichnet, dass** mittels des in dem jeweiligen lokalen Netzwerk (19) installierten SNMP Gerätemonitorings (12) innerhalb der lokal angeschlossenen digitalen Datenverarbeitungseinheiten (6) etwa veränderte Geräteeigenschaften der Ausgabegeräte (11) an das Accounting-Modul (2) innerhalb des Cloudservers (1) übertragbar sind, sind mittels des Cloudservers (1) etwa nach Erreichen definierter Grenzwerte selbsttätig Bestellungen von Verbrauchsmaterialen für den jeweiligen PS-Client (11) auslösbar und ergänzend über das zentrale Accounting-Modul (2) statistische Auswertungen, etwa hinsichtlich der Verbrauchsdaten der Ausgabegeräte (11) ausführbar sind.

10. Vorrichtung nach einem oder mehreren der vorhergehenden Ansprüche, **dadurch gekennzeichnet, dass** die in den an den Cloudserver (1) angeschlossenen Netzwerke (19) mittels der digitalen Datenverarbeitungseinheiten (6) erzeugten Druckaufträge zu keinem Zeitpunkt das Netzwerk (19) verlassen, insbesondere die Druckaufträge als solche nicht an den Cloudserver (1) übermittelt werden.

11. Vorrichtung nach einem oder mehreren der vorhergehenden Ansprüche, **dadurch gekennzeichnet, dass** die PS-Metadaten (17) als solche druckbare Dateien derart sind, dass diese mit den Standardeinstellungen des jeweiligen Ausgabegerätes (11) ausdruckbar sind.

12. Vorrichtung nach einem oder mehreren der vorhergehenden Ansprüche, **dadurch gekennzeichnet, dass** über eine mit dem Cloudserver (1) verbundene digitale Datenverarbeitungseinheit (6) auch ein so genannter follow-to-print-Druckauftrag (9) auslösbar ist oder Remote-Druckdaten erzeugbar sind, wobei dann die PS-Metadaten (17) incl. der Druckinhalte dieser Druckaufträge über die bestehende Datenverbindung an den Cloudserver (1) übermittelbar sind und ebendort in einer zentralen Printqueue (4) ablegbar sind, und einem weiteren zu einem beliebigen Zeitpunkt von dem jeweiligen Nutzer an einem beliebigen Ausgabegerät (11) abrufbar sind, wobei erst zu diesem Zeitpunkt die zur Ausführung des Druckauftrages (18) oder der Druckaufträge erforderlichen PPD.XML- Steuerungsdateien (10) innerhalb des Cloudservers (1) mit der PS-Metadatei (17) incl. der Druckinhalte innerhalb der Printqueue (4) in eine gerätespezifische PS-Druckdatei (18) überführt wird und vom Cloudserver (1) nach erfolgter Authentifizierung (16) an das zugehörige Ausgabegerät (11) übertragen wird.

13. Vorrichtung nach einem oder mehreren der vorhergehenden Ansprüche, **dadurch gekennzeichnet, dass** durch die zunehmende Nutzung des Cloudservers (1) in der PPD.XLM Datenbank (5) zumindest im Wesentlichen sämtliche PPD.XML-Steuerungsdateien (10) aller in Benutzung befindlicher Ausgabegeräte (11) abgelegt sind.

14. Vorrichtung nach einem oder mehreren der vorhergehenden Ansprüche, **dadurch gekennzeichnet, dass** die erfindungsgemäße Vorrichtung auch i.V.m. 3-D- Druckvorrichtungen analog einsetzbar ist.
